# EUROPEAN PATENT SPECIFICATION

(11) **EP 4 119 433 B1**
(45) Date of publication and mention of the grant of the patent: **04.09.2024**
(21) Application number: 22184782.5
(22) Date of filing: 13.07.2022
(51) Int. Cl.: B62M 9/126, B62M 9/16

(54) **PULLEY FOR A REAR DERAILLEUR OF A BICYCLE**
RIEMENSCHEIBE FÜR EINE KETTENSCHALTUNG EINES FAHRRADS
POULIE POUR UN DÉRAILLEUR ARRIÈRE DE BICYCLETTE

(30) Priority: 14.07.2021 DE 102021118248
(43) Date of publication of application: 18.01.2023
(73) Proprietor: Golec, Marcin, London SW19 2RR (GB)
(72) Inventor: Golec, Marcin, London SW19 2RR (GB)
(74) Representative: Farago-Schauer, Peter Andreas

(56) References cited:
- US-A1- 2005 057 097
- US-A1- 2018 328 479

## Description

The present invention relates to a toothed pulley for a rear derailleur of a bicycle carrying on each of its side faces a cushioning ring made of an elastically deformable material and adapted to come in contact with link plates of a roller chain running over the pulley.

A toothed pulley with a ring made of an elastically deformable material is disclosed in US 975 938 A in the form of a sprocket, wherein the cushioning rings serve as cushions between the teeth of the sprocket and the link plates of a roller chain trained engaged with the sprocket. As disclosed therein, the cushioning rings may have an annular or rectangular cross section.

Further toothed pulleys with respective cushioning rings made of an elastically deformable material are disclosed in US 10 253 865 B2 in the form of sprockets of a multi-gear cassette for a rear wheel of a bicycle, wherein the cushioning rings dampen the forces produced by the chain members running from the slack span of the chain onto a sprocket. These cushioning rings have rectangular cross sections.

Document US2005057097A1 shows the preamble of claim 1.

The prior art pulleys have the problem that nevertheless they are relatively noisy and buckling in operation.

Bicycle chains of an unconventional type, so-called flattop chains (or AXS chains), are known in the art, wherein the respective tops of the link plates are straight-lines, which enables a narrower chain construction with increased strength and durability.

If such a chain is used in a bicycle having a derailleur, there may be the problem that such a chain has some difficulties to run low-noise and smoothly through the derailleur. In particular, there would be the problem that the operation is very noisy and buckling. Accordingly, it is an object of the present invention to provide a pulley for a bicycle rear derailleur with silencing characteristics which is very low-noise in operation and runs very smoothly also with flattop chains.

The above object and further objects which will become apparent hereinafter are achieved by a pulley having the features of claim 1.

The present invention also provides for a rear derailleur of a bicycle according to claim 12 including the pulley of the invention.

Further advantageous features are set out in the dependent claims.

According to the invention, the pulley is for a bicycle rear derailleur. Such a derailleur usually comprises, as is known in the art, a guide pulley and a tension pulley both being rotatably mounted on a derailleur cage which is movable with respect to the bicycle and adapted to guide and tension a bicycle roller chain in an S-shape feeding to the cassette. The cage can be positioned under the desired sprocket of a multi-gear cassette attached to the hub of a rear wheel of a bicycle by an arm that can swing back and forth under the sprockets. Gear shifting is carried out by moving the arm which transfers the chain from one sprocket to another while pedaling.

Further, according to the invention, the pulley includes an annular channel formed adjacent to each side face to the pulley and opening radially outward, wherein each cushioning ring is supported by the annular channel. In a side view of the pulley, the annular channel forms a polygon, wherein the number of corners of the polygon is equal to the number of teeth of the pulley and wherein the corners of the polygon are angularly offset from the centers of the teeth of the pulley by the half angular distance between adjacent teeth of the pulley.

The cushioning ring is accommodated in the annular channel with a certain tension. The annular channel may be advantageously made in one piece with the pulley. Alternatively, the annular channel may be fixedly joined with the pulley.

Because the corners of the polygon are angularly offset from the center of the teeth of the pulley, the cushioning ring has straight portions, each straight portion extending under one tooth of the pulley and being angularly aligned with the respective tooth of the pulley.

The angular offset of the polygon corners from the teeth is particularly suitable in cases, wherein the derailleur is intended for chains of an unconventional type, wherein tops of the link plates are straight-line which enables a narrower chain construction with increased strength and durability. Such chains are known in the art as AXS or "flattop" chains and are manufactured by the SRAM corporation.

The inventive pulley with polygonal cushioning rings is particularly suited when embodied as a guide pulley of a rear derailleur in conjunction with AXS "flattop" chains devised as mentioned above. In a rear derailleur, the chain is running with the straight tops (flattops) over the guide pulley and the straight tops are perfectly matching the straight portions of the polygonal cushioning ring of the guide pulley. Accordingly, the impact of the chain on the guide pulley is smooth and silent.

While the polygonal cushioning ring according to the invention is particularly advantageous for the guide pulley of a bicycle rear derailleur if used with AXS "flattop" chains, also the tension pulley of a bicycle rear derailleur may advantageously have a polygonal cushioning ring if interacting with the flattop of a "flattop" type chain.

In an embodiment, the annular channel forming a polygon may be limited radially by a polygonal shoulder formed laterally of the pulley, and the annular channel forming a polygon may be defined axially between the side face of the pulley and a polygonal radial extension of the polygonal shoulder, which forms a flange. That is, the cushioning ring is supported radially by the polygonal shoulder and axially between the side face of the pulley and the radial extension of the polygonal shoulder.

The corners of the polygonal shoulder may be rounded. The corners of the polygonal radial extension of the polygonal shoulder may also be rounded.

The polygonal shoulder and the polygonal radial extension may be made in one piece with the pulley. Alternatively, they may be manufactured separately and fixedly joined to the pulley.

The polygonal shoulder may comprise a number of straight portions equal to the number of teeth of the pulley and angularly aligned with each respective tooth of the pulley. The polygonal radial extension of the polygonal shoulder may comprise a number of straight portions equal to the number of teeth of the pulley, each straight potion being angularly aligned with a respective tooth of the pulley.

Each cushioning ring may advantageously project radially from the annular channel, preferably by at least 1/4 of the total radial height of the cushioning ring and more preferably by at least 2/5 of the total radial height of the cushioning ring.

The straight portions of the polygonal cushioning ring dampen the impact of the chain rollers on the depressions or valleys between consecutive teeth. As known in the art, the depressions or valleys are formed between consecutive teeth of a pulley as seen in the axial direction of the pulley. Advantageously, the straight portions of the cushioning ring prevent, at least during the initial contact of the chain with the pulley, the contact of the chain rollers with the depressions or valleys between consecutive teeth, such that the cushioning ring is contacted only by the link plates of the chain.

While the cushioning rings may have well know cross sections, for example square, rectangular or circular, in a preferred embodiment of the invention each cushioning ring comprises, at least on its side facing the roller chain, a groove extending along its entire perimeter length, which groove, as seen in a cross-sectional view through the cushioning ring, is a recess flanked by two protrusions, wherein the protrusions are adapted and orientated to come in contact with outer and inner link plates, respectively, of a roller chain running over the pulley. This contributes to make the derailleur very silent and smooth running, because by the two protrusions which may be much narrower than the total width of the outer and inner link plates, relatively week dampening forces can be provided.

In said preferred embodiment, in a cross-sectional view through the cushioning ring the protrusions on each cushioning ring may be curved convexly and may be connected contiguously by the recess which is curved concavely, as seen from inside the cushioning ring.

In preferred embodiments, the cross section of each cushioning ring is generally x-shaped. In particular, the cross-sectional profile of each cushioning ring may have the shape of an alphabetic character x whose legs are short with respect to the body of the character and have concave sections between them. Preferably, the ends of the legs are concavely rounded. The legs may also be short with respect to their length and have concavely rounded ends.

In a cross-sectional view through the cushioning ring, the concavely rounded ends of the legs may be four circumferentially distributed and convexly curved protrusions of the respective cushioning ring which are connected contiguously by four circumferentially distributed and concavely curved recesses. Some profiles of this type can be mathematically described as elongated hypotrochoids with reversal points and four peaks, which are continuous and continuously differentiable, but the cross-sectional profile of the cushioning ring is not limited to such special shapes or to continuous and/or continuously differentiable shapes.

The x-shaped cushioning rings according to the preferred embodiment should be mounted to the pulley in a manner and orientation in which two convexly curved protrusions of the respective cushioning ring partially face the outer and inner link plates, respectively, of a roller chain running over the pulley and are able to come in contact therewith.

The invention is suited for a special form of a bicycle rear derailleur wherein the pulleys are rotatably mounted to the cage by mounting means and an interposed radial bearing, wherein the mounting means are arranged so as to be spaced from the center of rotation of the pulleys and are positioned along a circular mounting opening provided in the cage spaced away from the center of rotation of the pulleys, so as to leave a free space in the center of the pulleys in its mounted state, as described in EP 20177531.9. The relevant teaching of EP 20177531.9 is herewith incorporated by reference.

The invention is also suited for common bicycle rear derailleurs, wherein, for instance, the pulleys are rotatably mounted between two lateral plates of the cage on central bearings which are fitted on central bolts which connect two lateral plates of the cage to each other.

The elastically deformable material may be natural or synthetic rubber, polymer or elastomer or mixtures of the foregoing materials.

The above and other features of the invention will become apparent from the following description of preferred embodiments, given by way of non-limiting examples with reference to the accompanying drawings, wherein:
- Figure 1: is a perspective view of a second embodiment of a pulley of a rear derailleur for a bicycle;
- Figure 2: is the same perspective view as in Figure 1 further showing a part of a roller chain running over the pulley;
- Figure 3: is a plan side view of the arrangement of Figure 2 as seen from a position lying distantly from the pulley on its axis;
- Figure 4: is a sectional view through an angular sector of the tension pulley as seen from the same position as in Figure 3;
- Figure 5: is a sectional view of the pulley of Figure 1 along the line 5-5 in Figure 3;
- Figure 6: is a sectional view of the arrangement of Figure 2 along the line 6-6 in Figure 3;
- Figure 7: is an enlarged sectional view of a radial outer part of the pulley along the line 7-7 in Figure 4, i.e., through the gap between two consecutive teeth of the pulley;
- Figure 8: is an enlarged sectional view of a radial outer part of the pulley along the line 8-8 in Figure 4, i.e., through one of the teeth of the pulley; and
- Figure 9: is a schematic view of the rear part of a bicycle having a derailleur which is equipped with a tension pulley and a guide pulley as shown in the foregoing Figures.

Conventionally, pulleys of a rear derailleur may be rotatably mounted between two lateral plates of a cage on central bearings which are fitted on central bolts which connect two lateral plates of the cage to each other.

Pulleys as shown and described herein may also be mounted by mounting means (and not by central bolts) and an interposed radial bearing, wherein the mounting means are arranged so as to be spaced from the center of rotation of the pulley. The mounting means are positioned along a circular mounting opening provided in the cage spaced away from the center of rotation of the pulley. Such a bearing, which may be a ball bearing, a roller bearing or a slide bearing, may have a much larger radius than conventional bearings of the pulleys of a rear derailleur. The cage can be a single-plate or a two-plate cage. Such a bearing can be arranged so as to leave a free space in the center of the guide pulley in its mounted state, which provides for a free space which works against the accumulation of dirt because rotating pulley structural arms have been eliminated, and the chain guide is easy to clean. In addition, the free space, if provided at least in the center of the tension pulley, provides for a totally new and impressive look of the derailleur. With respect to this, reference is made to the pertinent teachings of a former patent application of the applicant of the present invention having the title "Improved chain guide for a rear derailleur of a bicycle" filed on May 29, 2020 with the EPO as EP 20177531.9, the content of which is herewith incorporated by reference.

Figure 10 is a schematic view of the rear part of a bicycle having a rear derailleur 100 which comprises a tension pulley 101 and a guide pulley 102 mounted at a cage 103. The pulleys 101 and 102 may optionally each have a free space in their center. The rest of the derailleur 100 is shown only schematically. The cassette is shown also schematically at reference number 104.

Pulleys as shown and described herein may be rotatably mounted between two lateral plates of a cage on central bearings which are fitted on central bolts which connect the two lateral plates of the cage to each other, or rotatably mounted on central bearings which are fitted on a single-plated cage.

Pulleys as shown and described herein may also be rotatably mounted between two lateral plates of a cage by mounting means (and not by central bolts) and an interposed radial bearing, wherein the mounting means are arranged so as to be spaced from the center of rotation of the pulley, as it is the case in EP 20177531.9. Also, in this case the cage may be a single-plated cage, as described in EP 20177531.9.

### EMBODIMENT

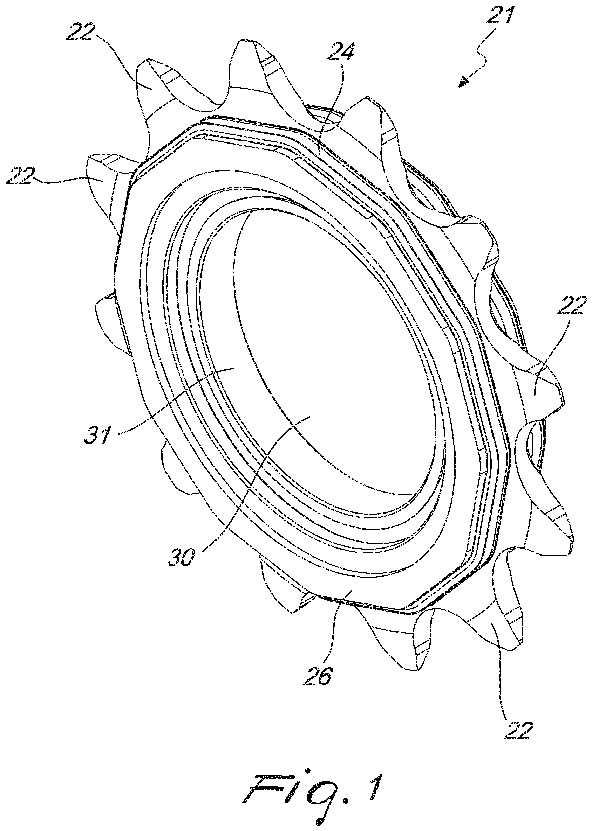

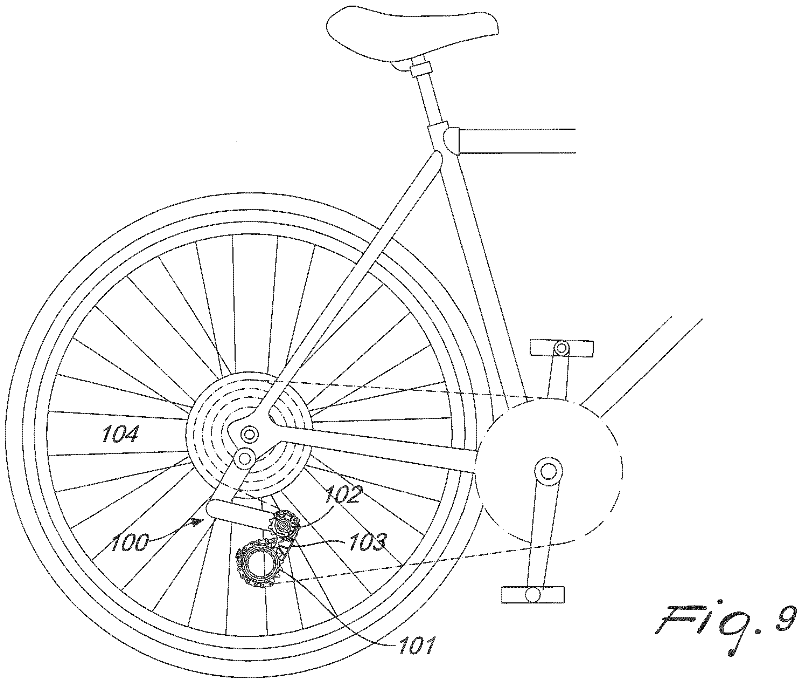

With reference to Figures 1 to 9, an embodiment of a pulley of a rear derailleur for a bicycle is described.

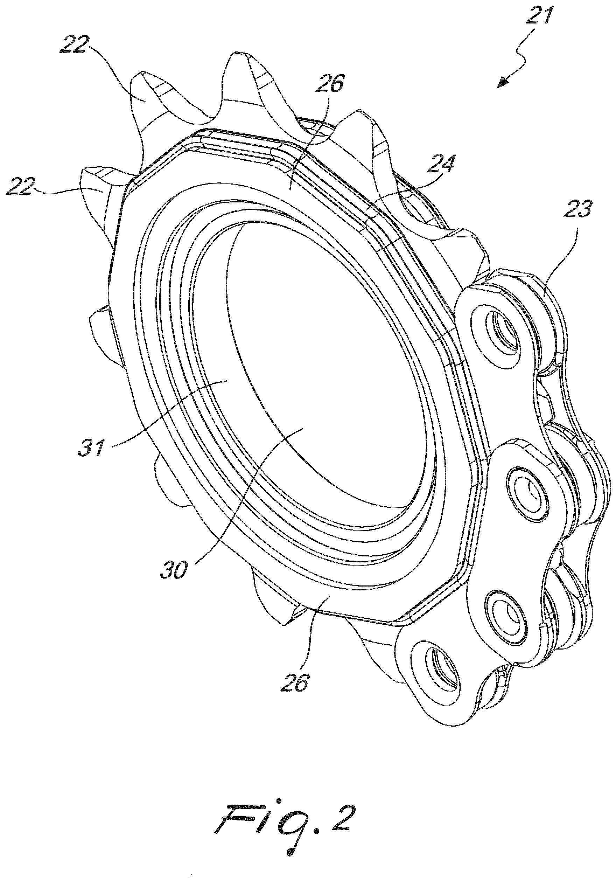

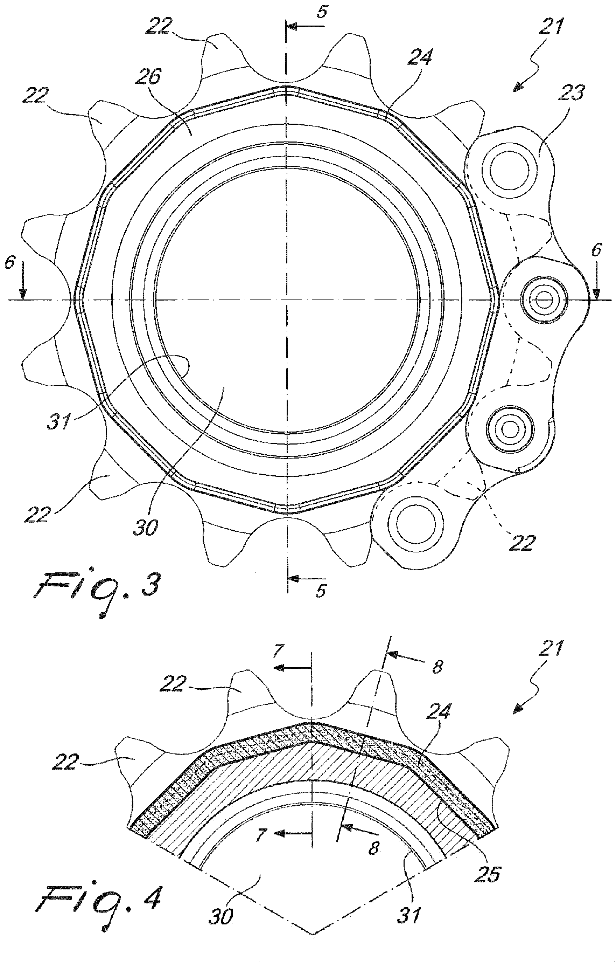

As shown therein, a pulley 21, which is shown as a guide pulley but may also be embodied as a tension pulley, has a plurality of teeth 22 adapted to come in contact with link members of a roller chain 23 running over the pulley 21 (as partially shown in Figures 2 and 3).

The pulley 21 carries on each of its axial side faces a cushioning ring 24 made of an elastically deformable material like natural or synthetic rubber, polymer or elastomer or mixtures thereof.

As is best seen in Figures 4 to 8, each cushioning ring 24 is supported by and accommodated in an annular channel formed adjacent to each side face to the pulley 21 and opening radially outward. In a side view of the pulley 21, the annular channel forms a polygon, wherein the number of corners of the polygon is equal to the number of teeth 22 of the pulley 21. The corners of the polygon are angularly offset from the centers of the teeth 22 of the pulley 21 by the half angular distance between adjacent teeth 22 of the pulley 21.

The annular channel is limited radially by a polygonal shoulder 25 formed laterally of the pulley 21 and is defined axially between the side face of pulley 21 and a polygonal radial extension 26 of the polygonal shoulder 25. The corners of the polygonal shoulder 25 and of the polygonal radial extension 26 are advantageously a little bit rounded.

The polygonal shoulder 25 and the polygonal radial extension 26 each comprises a number of straight portions being equal to the number of teeth 22 of the pulley 21 and being angularly aligned with a respective tooth 22.

Because each cushioning ring 24 is mounted with a certain tension around the corresponding polygonal shoulder 25 it also adopts a polygonal form.

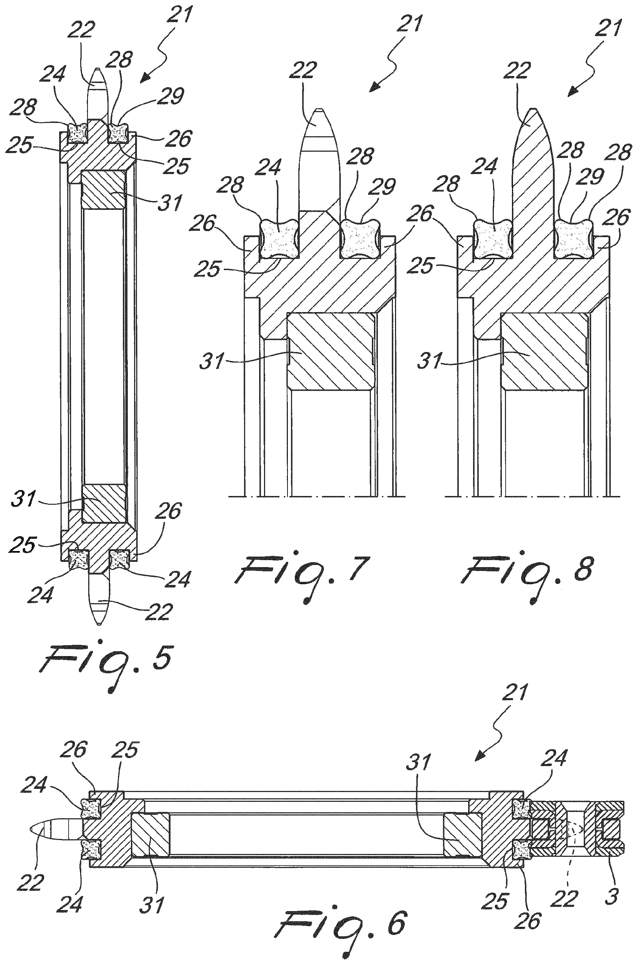

As seen best in Figures 7 and 8, each cushioning ring 24 has a cross section which is called herein generally x-shaped. More specifically, the cross-sectional profile of each cushioning ring 24 has the shape of an alphabetic character x whose legs are short with respect to the body of the character and have concave sections between them. The legs as such have preferably convex rounded ends which will be discussed later.

Preferably each cushioning ring 4 projects radially from the radial extensions 26 by at least approximately 2/5 of a total radial height of the cushioning ring 24 or by at least 1/4 of a total radial height of the cushioning ring 24. Advantageously, the compressibility and height of the cushioning ring 24 has to be chosen so that in operation the link plates of the roller chain 23 may contact the cushioning ring 24 but not the radial extensions 26.

As seen best in Figures 7 and 8, the rounded ends of the legs of each cushioning ring 24 are four circumferentially distributed and convexly curved protrusions 28 on the respective cushioning ring 24 which are connected contiguously by four circumferentially distributed and concavely curved recesses 29 in the respective cushioning ring 4.

Each cushioning ring 24 is mounted to the pulley 21 in a manner and orientation in which two curved protrusions 28 and one concavely curved recess 29 partially face the outer and inner link plates, respectively, of a roller chain 23 running over the pulley 21. The inner protrusion 28 is able to contact and dampen the inner link plates, and the outer protrusion 29 is able to contact and dampen the outer link plates.

While the x-shape of the cushioning rings 24 is advantageous in that one does not have to pay attention to the orientation in which one places them on the cushioning rings 24, it has to be noted that only the two upper curved protrusions 28 and the one upper concavely curved recess 29 are essential for the function of the cushioning ring 24 according to the broadest aspect of the present invention.

In other words, in the broadest aspect of the invention, each cushioning ring 24 comprises, at its side facing the roller chain 23, only one groove extending along its entire perimeter length, which groove, as seen in a cross-sectional view through the cushioning ring 24, is the recess 29 flanked by the two protrusions 28, wherein the protrusions 28 are adapted and orientated to come in contact with outer and inner link plates, respectively, of the roller chain 23 running over the pulley 21. Preferably, a similar additional groove can be provided at the opposite side of the cushioning ring 24 facing the polygonal shoulder 25. Further preferably, similar additional grooves can be provided at the lateral faces of the cushioning ring 24 facing the polygonal radial extension 26 and the pulley 21, respectively.

The number of similar additional grooves may vary between 1 and 3, and any combinations of sides are envisaged as preferred alternatives of the invention. The most preferred alternative of the invention includes 4 grooves resulting to the above-described x-shape which is advantageous in terms of its insertion, as discussed, and elasticity. In addition, the x-shape is advantageous in terms of manufacturing.

The function of the groove at the side facing the roller chain 23 is to dampen the forces produced by chain members running from the slack span of the roller chain 23 onto the pulley 21 in a smooth and well-defined manner and with fewer losses than cushioning rings having exact annular or rectangular cross sections.

The cushioning rings 24 may also have other basic cross sections than shown herein, for example square with three even sides, if each cushioning ring 24 comprises, at least on its side facing the roller chain 23, a groove extending along its entire perimeter length, which groove, as seen in a cross-sectional view through the cushioning ring 24, forms a recess 29 flanked by two protrusions 28, wherein the protrusions 28 are adapted and orientated to come in contact with outer and inner link plates, respectively, of a roller chain 23 running over the pulley 21.

The cushioning rings 24 may have well known cross sections, for example square or circular.

Essential for the embodiment of Figures 1 to 8 is that the cushioning rings 24 adopt the polygonal form of the polygonal shoulders 25. That is, also each cushioning ring 24 comprises a number of straight portions being equal to the number of teeth 22 of the pulley 21 and being angularly aligned with one respective tooth 22.

Therefore, the embodiment of Figures 1 to 8 is particularly suited when embodied as a guide pulley of a rear derailleur. Such a rear derailleur would be suited for chains 23 of a special type wherein the tops of the link plates are straight-line (flattops) which are known as AXS chains, as mentioned above. In a rear derailleur, the chain 23 is running with the straight tops over the guide pulley 102, as seen from Figure 3, and the straight tops are perfectly matching the straight portions of the polygonal cushioning ring 24 of the guide pulley 102. Accordingly, the impact of the chain 23 on the pulley 21 is smooth and silent.

The tension pulley 101 of such rear derailleur may be of any known type or may be a similar type as described herein. In operation, the conventional part of the link plates of the AXS chain 23 will interact first with the tension pulley 101 and subsequently in a reverse orientation over the guide pulley 21, where the straight tops of the link plates of the chain 23 will cooperate with the straight portions of the guide pulley 21. Thus, the impact of the chain 23 at both pulleys is silent and smooth.

In the embodiment of Figures 1 to 8, the pulley 21 is of a type having a free space 30 in its center, as described in EP 20177531.9. In this case the pulley 21 will be mounted by mounting means (not shown) via an interposed roller bearing 31 to a single-plated cage of the rear derailleur. However, any conventional guide or tension pulley for a rear derailleur of a bicycle, wherein for instance the pulleys are rotatably mounted between two lateral plates of the cage on central bearings which are fitted on central bolts which connect two lateral plates of the cage to each other are envisaged as to be included in the scope of the present invention, as defined by the appended claims.

The disclosure of the present invention includes all modifications and equivalents of the subject matter recited in the claims appended hereto as permitted by applicable law. Moreover, any combination of the above-described elements in all possible variations thereof is encompassed by the disclosure unless indicated otherwise herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realize that the disclosure may be embodied in other specific forms without departing from the disclosure or essential characteristics thereof. The foregoing embodiments are therefore to be considered illustrative rather than limiting to the disclosure described herein in all respects. The scope of the invention is thus indicated by the appended claims, rather than the foregoing description.

### List of references

- 21: pulley
- 22: tooth
- 23: roller chain
- 24: cushioning ring
- 25: polygonal shoulder
- 26: polygonal radial extension
- 28: protrusion
- 29: recess
- 30: free space
- 31: roller bearing
- 100: rear derailleur
- 101: tension pulley
- 102: guide pulley
- 103: cage
- 104: cassette

## Claims

1. A toothed pulley (21) for a bicycle rear derailleur (100), the pulley (21) carrying on each of its side faces a cushioning ring (24) made of an elastically deformable material and adapted to come in contact with link plates of a roller chain (23) running over the pulley (21), wherein
the pulley (21) includes an annular channel formed adjacent to each side face to the pulley (21) and opening radially outward, wherein each cushioning ring (24) is supported by the annular channel, **characterized in that**
in a side view of the pulley (21), the annular channel forms a polygon, wherein the number of corners of the polygon is equal to the number of teeth (22) of the pulley (21), and wherein the corners of the polygon are angularly offset from the centers of the teeth (22) of the pulley (21) by the half angular distance between adjacent teeth (22) of the pulley (21).

2. The pulley (21) according to claim 1, wherein the annular channel is limited radially by a polygonal shoulder (25) formed laterally of the pulley (21) and is defined axially between the side face of the pulley (21) and a polygonal radial extension (26) of the polygonal shoulder (25).

3. The pulley (21) according to claim 2, wherein the polygonal shoulder (25) and the polygonal radial extension (26) are made in one piece with the pulley (21).

4. The pulley (21) according to claims 2 or 3, wherein the corners of the polygonal shoulder (25) are rounded.

5. The pulley (21) according to claims 2, 3 or 4, wherein the polygonal shoulder (25) comprises a number of straight portions being equal to the number of teeth (22) of the pulley (21) and being angularly aligned with one of the teeth (22) each.

6. The pulley (21) according to one or more of the preceding claims, wherein the pulley (21) is a guide pulley (102) for a bicycle rear derailleur (100).

7. The pulley (21) according to one or more of the preceding claims, wherein each cushioning ring (24) comprises, at least on its side facing of a roller chain (23) running over the pulley (21), a groove extending along its entire perimeter length, which groove, as seen in a cross-sectional view through the cushioning ring (24), is a recess (29) flanked by two protrusions (28), wherein the protrusions (28) are adapted and orientated to come in contact with outer and inner link plates, respectively, of the roller chain (23).

8. The pulley (21) according to claim 7, wherein in a cross-sectional view through the cushioning ring (24) the protrusions (28) are curved convexly and are connected contiguously by the recess (29) which is curved concavely.

9. The pulley (21) according to claim 7 or 8, wherein the cross section of each cushioning ring (24) is generally x-shaped.

10. The pulley (21) according to claims 8 or 9, wherein the cross-sectional profile of each cushioning ring (24) has the shape of an alphabetic character x whose legs are short with respect to the body of the character and have concave sections between them, wherein preferably the ends of the legs are concavely rounded.

11. The pulley (21) according to claim 10, wherein in a cross-sectional view through the cushioning ring (24) the concavely rounded ends of the legs are four circumferentially distributed and convexly curved protrusions (28) of the respective cushioning ring (24) which are connected contiguously by four circumferentially distributed and concavely curved recesses (29), wherein each cushioning ring (24) is mounted to the pulley (21) in a manner and orientation in which the two convexly curved protrusions (28) of claim 7 or two of the four convexly curved protrusions (28) of claim 10 partially face the outer and inner link plates, respectively, of a roller chain (23) running over the pulley (21) and are able to come in contact therewith.

12. A bicycle rear derailleur (100) comprising a cage (103) supporting a tension pulley (101) and a guide pulley (102) both being rotatably mounted on the cage (103), the cage (103) being movable with respect to the bicycle and adapted to guide a roller chain (3, 23, 43) in an S-shape, wherein the guide pulley (102) is devised according to one or more of claims 1 to 11.

13. The bicycle rear derailleur (100) according to claim 11, wherein at least one of the pulleys (1, 101, 102) is rotatably mounted to the cage (103) by mounting means and an interposed radial bearing (11), wherein the mounting means are arranged so as to be spaced from the center of rotation of the pulley (21) and are positioned along a circular mounting opening provided in the cage (103) spaced away from the center of rotation of the pulley (21), so as to leave a free space (10) in the center of the pulley (21) in its mounted state.

## Patentansprüche

1. Eine Zahnriemenscheibe (21) für eine Kettenschaltung (100) eines Fahrrads, wobei die Riemenscheibe (21) auf jeder ihrer Seitenflächen einen Dämpfungsring (24) trägt, der aus einem elastisch verformbaren Material besteht und ausgebildet ist, um in Kontakt mit Kettenlaschen einer Rollenkette (23) zu kommen, die über die Riemenscheibe (21) verläuft; wobei
die Riemenscheibe (21) einen Ringkanal einschließt, der angrenzend an jede Seitenfläche der Riemenscheibe (21) geformt ist und sich radial nach außen öffnet, wobei jeder Dämpfungsring (24) vom Ringkanal getragen ist; **dadurch gekennzeichnet, dass**
der Ringkanal in einer Seitenansicht der Riemenscheibe (21) ein Vieleck bildet, wobei die Anzahl der Ecken des Vielecks gleich der Anzahl der Zähne (22) der Riemenscheibe (21) ist und wobei die Ecken des Vielecks von den Zentren der Zähne (22) der Riemenscheibe (21) um den halben Winkelabstand zwischen benachbarten Zähnen (22) der Riemenscheibe (21) winklig versetzt sind.

2. Die Riemenscheibe (21) gemäß Anspruch 1, wobei der Ringkanal radial durch eine vieleckige Schulter (25) begrenzt ist, die seitlich von der Riemenscheibe (21) geformt und axial zwischen der Seitenfläche der Riemenscheibe (21) und einer vieleckigen radialen Erweiterung (26) der vieleckigen Schulter (25) bestimmt ist.

3. Die Riemenscheibe (21) gemäß Anspruch 2, wobei die vieleckige Schulter (25) und die vieleckige radiale Erweiterung (26) einstückig mit der Riemenscheibe (21) hergestellt sind.

4. Die Riemenscheibe (21) gemäß Anspruch 2 oder 3, wobei die Ecken der vieleckigen Schulter (25) gerundet sind.

5. Die Riemenscheibe (21) gemäß Anspruch 2, 3 oder 4, wobei die vieleckige Schulter (25) eine Anzahl gerader Abschnitte umfasst, die gleich der Anzahl der Zähne (22) der Riemenscheibe (21) ist, wobei sie winklig mit jeweils einem der Zähne (22) ausgerichtet sind.

6. Die Riemenscheibe (21) gemäß einem oder mehreren der obigen Ansprüche, wobei die Riemenscheibe (21) eine Umlenkscheibe (102) für eine Kettenschaltung (100) eines Fahrrads ist.

7. Die Riemenscheibe (21) gemäß einem oder mehreren der obigen Ansprüche, wobei jeder Dämpfungsring (24) mindestens an seiner Seite, die einer Rollenkette (23) zugewandt ist, welche über die Riemenscheibe (21) verläuft, eine Nut umfasst, die sich über die Länge ihres gesamten Umfangs erstreckt, wobei die Nut, gesehen in einer Querschnittsansicht durch den Dämpfungsring (24), eine von zwei Vorsprüngen (28) flankierte Vertiefung (29) ist, wobei die Vorsprünge (28) ausgebildet und ausgerichtet sind, um in Kontakt mit äußeren beziehungsweise inneren Kettenlaschen der Rollenkette (23) zu kommen.

8. Die Riemenscheibe (21) gemäß Anspruch 7, wobei in einer Querschnittsansicht durch den Dämpfungsring (24) die Vorsprünge (28) konvex gekrümmt und durchgehend durch die Vertiefung (29) verbunden sind, die konkav gekrümmt ist.

9. Die Riemenscheibe (21) gemäß Anspruch 7 oder 8, wobei der Querschnitt jedes Dämpfungsrings (24) allgemein X-förmig ist.

10. Die Riemenscheibe (21) gemäß Anspruch 8 oder 9, wobei das Querschnittsprofil jedes Dämpfungsrings (24) die Form des Buchstabens X hat, dessen Beine im Verhältnis zum Körper des Buchstabens kurz sind und konkave Abschnitte zwischen sich haben, wobei die Enden der Beine vorzugsweise konkav gerundet sind.

11. Die Riemenscheibe (21) gemäß Anspruch 10, wobei in einer Querschnittsansicht durch den Dämpfungsring (24) die konkav gerundeten Enden der Beine vier in Umfangsrichtung verteilte und konvex gekrümmte Vorsprünge (28) des jeweiligen Dämpfungsrings (24) sind, welche durchgehend durch vier in Umfangsrichtung verteilte und konkav gekrümmte Vertiefungen (29) verbunden sind; wobei jeder Dämpfungsring (24) an der Riemenscheibe (21) auf eine Art und in einer Ausrichtung montiert ist, in welcher die zwei konvex gekrümmten Vorsprünge (28) gemäß Anspruch 7 oder zwei der vier konvex gekrümmten Vorsprünge (28) gemäß Anspruch 10 teilweise den äußeren beziehungsweise inneren Kettenlaschen einer Rollenkette (23) zugewandt sind, die über die Riemenscheibe (21) verläuft, und in der Lage sind, in Kontakt damit zu kommen.

12. Eine Riemenscheibe (100) für eine Kettenschaltung eines Fahrrads, die einen Käfig (103) umfasst, welcher eine Spannrolle (101) und eine Umlenkscheibe (102) trägt, die beide drehbar am Käfig (103) montiert sind, wobei der Käfig (103) im Verhältnis zum Fahrrad beweglich und ausgebildet ist, um eine Rollenkette (3, 23, 43) in S-Form zu führen, wobei die Umlenkscheibe (102) gemäß einem oder mehreren der Ansprüche 1 bis 11 konstruiert ist.

13. Die Riemenscheibe (100) für eine Kettenschaltung eines Fahrrads gemäß Anspruch 11, wobei mindestens eine der Riemenscheiben (1, 101, 102) mit Hilfe von Montagemitteln und eines zwischengeschalteten Querlagers (11) drehbar am Käfig (103) montiert ist; wobei die Montagemittel vom Rotationszentrum der Riemenscheibe (21) beabstandet angeordnet und entlang einer im Käfig (103) angebrachten kreisförmigen Montageöffnung, vom Rotationszentrum der Riemenscheibe (21) beabstandet, positioniert sind, um einen Freiraum (10) im Zentrum der Riemenscheibe (21) in ihrem montierten Zustand zu lassen.

## Revendications

1. Poulie dentée (21) pour un dérailleur arrière de bicyclette (100), la poulie (21) portant sur chacune de ses faces latérales un anneau d'amortissement (24) constitué d'un matériau élastiquement déformable et adapté pour venir en contact avec des plaques de liaison d'une chaîne à galets (23) passant sur la poulie (21), dans laquelle
la poulie (21) inclut un canal annulaire formé de façon adjacente à chaque face latérale de la poulie (21) et s'ouvrant radialement vers l'extérieur, dans laquelle chaque anneau d'amortissement (24) est supporté par le canal annulaire, **caractérisée en ce que**
dans une vue latérale de la poulie (21), le canal annulaire forme un polygone, dans laquelle le nombre de coins du polygone est égal au nombre de dents (22) de la poulie (21), et dans laquelle les coins du polygone sont décalés de façon angulaire par rapport aux centres des dents (22) de la poulie (21) selon la moitié de la distance angulaire entre des dents (22) adjacentes de la poulie (21).

2. Poulie (21) selon la revendication 1, dans laquelle le canal annulaire est limité radialement par un épaulement polygonal (25) formé latéralement de la poulie (21) et défini axialement entre la face latérale de la poulie (21) et une extension radiale polygonale (26) de l'épaulement polygonal (25).

3. Poulie (21) selon la revendication 2, dans laquelle l'épaulement polygonal (25) et l'extension radiale polygonale (26) sont constituées d'une seule pièce avec la poulie (21).

4. Poulie (21) selon les revendications 2 ou 3, dans laquelle les coins de l'épaulement polygonal (25) sont arrondis.

5. Poulie (21) selon les revendications 2, 3 ou 4, dans laquelle l'épaulement polygonal (25) comprend un nombre de portions droites égal au nombre de dents (22) de la poulie (21) et respectivement alignées de façon angulaire avec l'une des dents (22).

6. Poulie (21) selon l'une ou plusieurs des revendications précédentes, dans laquelle la poulie (21) est une poulie de guidage (102) pour un dérailleur arrière de bicyclette (100).

7. Poulie (21) selon l'une ou plusieurs des revendications précédentes, dans laquelle chaque anneau d'amortissement (24) comprend, au moins sur son côté tourné vers une chaîne à galets (23) passant sur la poulie (21), une rainure s'étendant le long de toute la longueur de son périmètre, ladite rainure, vue dans une vue en section transversale à travers l'anneau d'amortissement (24), étant une cavité (29) bordée par deux saillies (28), dans laquelle les saillies (28) sont adaptées et orientées pour venir en contact avec des plaques de liaison extérieure et intérieure, respectivement, de la chaîne à galets (23).

8. Poulie (21) selon la revendication 7, dans laquelle, dans une vue en section transversale à travers l'anneau d'amortissement (24), les saillies (28) sont incurvées de façon convexe et sont reliées de façon contiguë par la cavité (29) incurvée de façon concave.

9. Poulie (21) selon la revendication 7 ou 8, dans laquelle la section transversale de chaque anneau d'amortissement (24) est généralement en forme de x.

10. Poulie (21) selon les revendications 8 ou 9, dans laquelle le profil de section transversale de chaque anneau d'amortissement (24) présente la forme d'un caractère alphabétique x dont les branches sont courtes par rapport au corps du caractère et présentent des sections concaves entre elles, dans laquelle les extrémités des branches sont de préférence arrondies de façon concave.

11. Poulie (21) selon la revendication 10, dans laquelle, dans une vue en section transversale à travers l'anneau d'amortissement (24), les extrémités arrondies de façon concave des branches sont quatre saillies (28) de l'anneau d'amortissement (24) respectif, incurvées de façon convexe et réparties circonférentiellement, lesquelles sont reliées de façon contiguë par quatre cavités (29) incurvées de façon concave et réparties circonférentiellement, dans laquelle chaque anneau d'amortissement (24) est monté sur la poulie (21) d'une manière et selon une orientation dans laquelle les deux saillies (28) incurvées de façon convexe de la revendication 7 ou deux parmi les quatre saillies (28) incurvées de façon convexe de la revendication 10 sont tournées partiellement vers les plaques de liaison extérieure et intérieure, respectivement, d'une chaîne à galets (23) passant sur la poulie (21) et peuvent venir en contact avec celles-ci.

12. Dérailleur arrière de bicyclette (100) comprenant une cage (103) supportant une poulie de tension (101) et une poulie de guidage (102) toutes deux montées de façon rotative sur la cage (103), la cage (103) étant déplaçable par rapport à la bicyclette et adaptée pour guider une chaîne à galets (3, 23, 43) en forme de S, dans lequel la poulie de guidage (102) est conçue selon l'une ou plusieurs des revendications 1 à 11.

13. Dérailleur arrière de bicyclette (100) selon la revendication 11, dans lequel l'une au moins des poulies (1, 101, 102) est montée de façon rotative sur la cage (103) par des moyens de montage et un palier radial (11) intercalé, dans lequel les moyens de montage sont agencés de manière à être espacés du centre de rotation de la poulie (21) et sont positionnés le long d'une ouverture de montage circulaire disposée dans la cage (103) à distance du centre de rotation de la poulie (21), de manière à laisser un espace libre (10) dans le centre de la poulie (21) dans son état monté.
